Europäisches Patentamt

(19) European Patent Office

Office européen des brevets

(11) Veröffentlichungsnummer: **0 087 626**
**B1**

(12) **EUROPÄISCHE PATENTSCHRIFT**

(45) Veröffentlichungstag der Patentschrift:
20.05.87

(21) Anmeldenummer: **83101222.4**

(22) Anmeldetag: **09.02.83**

(51) Int. Cl.⁴: **G 01 N 27/50,** G 01 N 27/56

(54) Gassensor, insbesondere für Abgase von Brennkraftmaschinen.

(30) Priorität: **26.02.82 DE 3206903**

(43) Veröffentlichungstag der Anmeldung:
**07.09.83 Patentblatt 83/36**

(45) Bekanntmachung des Hinweises auf die Patenterteilung:
**20.05.87 Patentblatt 87/21**

(84) Benannte Vertragsstaaten:
**DE FR GB**

(56) Entgegenhaltungen:
**DE-A-2 855 012**
**FR-A-2 470 383**
**GB-A-2 075 690**
**US-A-4 019 974**

**Patent Abstracts of Japan, vol. 6, no. 241, 30 November 1982 & JP-A-57-139658**

(73) Patentinhaber: **ROBERT BOSCH GMBH, Postfach 50, D-7000 Stuttgart 1 (DE)**

(72) Erfinder: **Bayha, Kurt, Wernerstrasse 17, D-7141 Oberriexingen (DE)**
Erfinder: **Weyl, Helmut, Dipl.- Ing., Peter- von- Koblenz- Strasse 34, D-7141 Schwieberdingen (DE)**

## Beschreibung

### Stand der Technik

Die Erfindung geht aus von einem Gassensor nach der Gattung des Anspruchs 1. Es sind schon eine Anzahl von Gassensoren bekannt, die gemäß der Gattung des Anspruchs 1 in der Längsbohrung eines Metallgehäuses einen plättchenförmigen Träger für Sensorelemente abgedichtet umfassen:

In der DE-A- 28 55 012 hat der Gassensor eine Dichtung, bei der zwei aufeinanderliegende Formteile, die den Träger umfassen, eine Tasche bilden und in dieser Tasche Glas oder Kitt als Dichtmaterial enthalten; das Glas bzw. der Kitt füllt dabei nur die Tasche aus, dichtet jedoch nicht den Bereich zwischen den Formteilen und dem Metallgehäuse ab. Kitt und Glas sind darüber hinaus auch nicht immer befriedigend hinsichtlich ihrer Schüttelfestigkeit, welche bei der Anwendung von Gassensoren in Brennkraftmaschinen zumeist erforderlich ist.

Die DE-A- 26 57 541 zeigt einen Gassensor, dessen plättchenförmiger Träger im Metallgehäuse mittels eines keramischen Zementes eingebaut und abgedichtet ist; keramischer Zement - wie auch der in der vorstehend genannten DE-A- 28 55 012 erwähnte Kitt - besitzt zumeist auch eine zu geringe Schüttelfestigkeit und läßt sich darüber hinaus in einer Massenfertigung schwierig verarbeiten. Ein solcher keramischer Zement ist beispielsweise aus der US-A- 4 007 435 bekannt und besteht beispielsweise aus einem Keramikpulver (MgO) und Natriumsilicat oder einem Binder (Phosphat).

In der DE-A- 29 07 032 ist eine Dichtung beschrieben, bei der der plättchenförmige Träger durch einen Schlitz einer im Metallgehäuse fixierten Metallscheibe geführt und mittels eines Glas- oder Hartlotes darin befestigt ist; das Lot dichtet dabei gleichzeitig den Spalt zwischen Metallscheibe und dem Metallgehäuse ab. Eine solche Dichtung erschwert in einer Serienfertigung das Einhalten einer zuverlässigen Fertigungssicherheit und ist auch nicht unempfindlich gegenüber Schüttelbeanspruchungen.

Gassensoren mit plättchenförmigen Trägern für schichtförmige Sensorelemente und Heizelemente sind in zahlreichen Ausführungsformen bekannt; Beispiele von Gassensoren mit Heizelementen sind aus den oben genannten Druckschriften ersichtlich.

Bezüglich des elektrischen Anschlusses von Sensorelementen und von Heizelementen sei verwiesen auf die DE-A- 26 57 541, die DE-A- 25 48 019 und die US-A- 4 007 435, welche Lötanschlüsse zeigen. In der DE-A- 25 47 683 wird als Anschluß für ein schichtförmiges Sensorelement eine Nietverbindung beschrieben. Die DE-A- 31 50 435 stellt einen plättchenförmigen Träger nit Vertiefungen bzw. Bohrung dar, in welchen ein Anschlußdraht mittels einer sinterfähigen Verankerungsmasse (z. B. Edelmetall-Cermet) festgelegt ist. Erwähnt sei außerdem noch die DE-A- 25 26 340, in welcher in der Beschreibung auf eine nicht dargestellte Klemmkontaktierung verwiesen wird.

### Vorteile der Erfindung

Der erfindungsgemäße Gassensor mit den kennzeichnenden Merkmalen des Anspruchs 1 hat demgegenüber den Vorteil, daß der Träger eine solche Dichtung besitzt, welche den gesamten freien Querschnitt der Längsbohrung des Metallgehäuses abdichtet, zuverlässige Schüttelfestigkeit gewährleistet, sich mit ihrem Ausdehnungsverhalten bei den vorkommenden Temperaturen der Ausdehnung der anderen Bauelemente des Gassensors anpaßt und auch in einer Massenproduktion von hoher Fertigungssicherheit ist.

Durch die in den abhängigen Ansprüchen aufgeführten Maßnahmen sind vorteilhafte Weiterbildungen und Verbesserungen des im Anspruch 1 angegebenen Gassensors möglich. Besonders vorteilhaft ist es, wenn für die Dichtung als Elektroisolierpulver Talkum Verwendung findet. Die erfindungsgemäße Ausführungsform des Gassensors eignet sich darüber hinaus besonders gut für die Anordnung einer Klemmkontaktierung der Kontaktflächen auf dem Sensorelement-Träger.

### Zeichnung

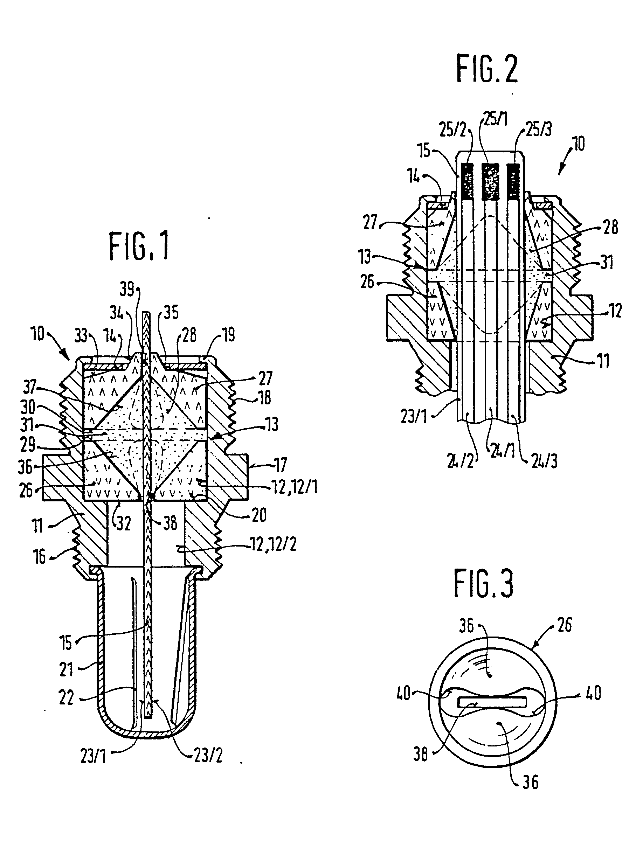

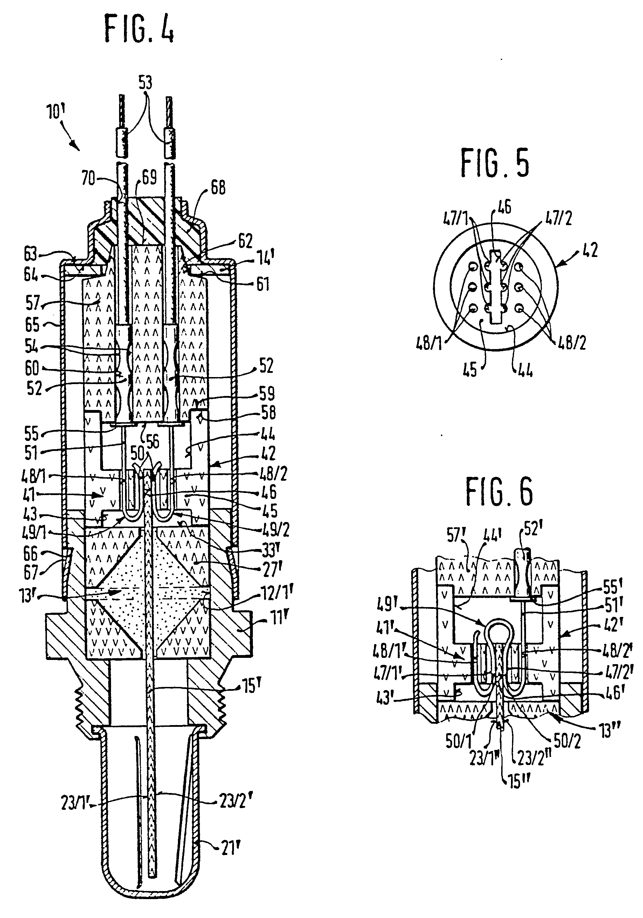

Ausführungsbeispiele der Erfindung sind in der Zeichnung dargestellt und in der nachfolgenden Beschreibung näher erläutert. Es zeigen Figur 1 einen erfindungsgemäßen Gassensor im Längsschnitt und in vergrößerter Darstellung, Figur 2 die Seitenansicht des in Figur 1 dargestellten Dichtungsbereichs des Gassensors in vergrößerter Darstellung, Figur 3 die Draufsicht auf das untere Formteil der Dichtung gemäß den Figuren 1 und 2, Figur 4 einen Längsschnitt durch einen vergrößert dargestellten Gassensor, dessen Dichtung mit einer Klemmkontaktierung für die Kontaktflächen auf dem Träger kombiniert ist, Figur 5 eine Draufsicht auf die Kontaktführungshülse der Klemmkontaktierung nach Figur 4 in vergrößerter Darstellung und Figur 6 einen Längsschnitt durch eine solche Ausführungsform einer Klemmkontaktierung, bei der mittels eines einzigen Klemmkontaktteils zwei auf verschiedenen Großflächen des Trägers angeordnete Kontaktflächen verbunden sind.

## Beschreibung der Ausführungsbeispiele

Der in den Figuren 1 und 2 dargestellte Gassensor 10 setzt sich im wesentlichen zusammen aus einem Metallgehäuse 11 mit seiner Längsbohrung 12, einer in der Metallgehäuse-Längsbohrung 12 geführten mehrteiligen Dichtung 13, einem die Bauteile der Dichtung 13 zusammendrückenden Federelement 14 und einem von der mehrteiligen Dichtung 13 umfaßten, plättchenförmigen Träger 15, welcher in Längsrichtung durch die Metallgehäuse-Längsbohrung 12 verläuft, auf seinem meßgasseitigen Endabschnitt mindestens ein nicht dargestelltes Sensorelement und gegebenenfalls auch mindestens ein nicht dargestelltes, schichtförmiges Heizelement besitzt.

Das Metallgehäuse 11 besitzt auf der Außenseite seines meßgasseitigen Endabschnitts ein Einschraubgewinde 16 und zusätzlich auch ein Schlüsselsechskant 17 für den Einbau des Gassensors 10 in einen nicht dargestellten, meßgasführenden Raum; anstelle des Einschraubgewindes 16 und des Schlüsselsechskants 17 können Gassensoren aber auch in Öffnungen von meßgasführenden Räumen eingesteckt werden und gegebenenfalls daran mittels separater Schrauben befestigt sein, welche durch einen gelochten, am Metallgehäuse angeformten Flansch führen. Der anschlußseitige Endabschnitt des Metallgehäuses 11 kann mit einem Außengewinde 18 für einen nicht dargestellten Anschlußstecker versehen sein und gegebenenfalls auch mit einer (nicht dargestellten) Führungsnut für den (nicht dargestellten) Anschlußstecker versehen sein. Der anschlußseitige Endabschnitt des Metallgehäuses 11 ist außerdem noch mit einem Bördelrand 19 ausgestattet, der auf den Randbereich des bevorzugt als Scheibe ausgebildeten Federelements 14 greift.

Die Längsbohrung 12 des Metallgehäuses 11 bildet zwischen ihrem anschlußseitigen Bereich 12/1 und ihrem meßgasseitigen einen kleineren Durchmesser habenden Bereich 12/2 eine Schulter 20; auf dieser Schulter 20 liegt die Dichtung 13 auf, welche im anschlußseitigen Bereich 12/1 der Gehäuse-Längsbohrung 12 seitlich geführt ist.

Am meßgasseitigen Endabschnitt des Metallgehäuses 11 ist bei der bevorzugten Ausführungsform ein Schutzrohr 21 mit bekannten Mitteln befestigt, das Schlitze 22 für den Ein- und Austritt des Meßgases aufweist und den meßgasseitigen Abschnitt des Trägers 15 mit Abstand umgibt. Derartige Schutzrohre 21 bestehen bevorzugt aus einem wärmebeständigen Material, können jedoch auch aus anderen geeigneten Stoffen, z. B. Keramik, bestehen.

Der plättchenförmige Träger 15 des Gassensors 10 ist im meßgasseitigen Bereich seiner Großflächen 23/1 und 23/2 mit (mindestens) einem nicht dargestellten, schichtförmigen Sensorelement versehen, welches über Leiterbahnen 24/1 mit dem anschlußseitigen Endabschnitt des Trägers 15 elektrisch verbunden und mit Kontaktflächen 25/1 ausgestattet ist; entsprechende Kontaktflächen 25/2 und 25/3 sind mit Abstand neben der Kontaktfläche 25/1 angebracht, die über Leiterbahnen 24/2 und 24/3 zu einem nicht dargestellten schichtförmigen Heizelement führen, das sich ebenfalls auf dem meßgasseitigen Endabschnitt des Trägers 15 befindet. Beispiele derartiger Sensoren und Heizelemente sind aus den im Abschnitt "Stand der Technik" genannten Druckschriften zu entnehmen; zusätzlich sei auch auf die DE-A- 28 26 515 verwiesen, welche neben Sensorelementen zur Bestimmung eines Gaspartialdruckes auch Sensorelemente zur Bestimmung der Temperatur, zur Bestimmung der relativen Feuchtigkeit bzw. zur Messung des Taupunktes und auch eine Heizung beschreibt; hingewiesen sei auch auf die DE-A- 31 22 861, welche ein Sensorelement zur Messung des Absolutdruckes von Luft beschreibt. Der Träger 15 kann bei den genannten Sensoren aus einem elektrisch isolierenden Material (z. B. Aluminiumoxid) bestehen, er kann aber auch selbst als aktives Bauteil zum Gassensor gehören - wie es beispielsweise aus der DE-A- 28 55 012 zu entnehmen ist. Für den Fall, daß der Träger 15 selbst als aktives Bauelement des Sensorelementes wirksam ist, wird unter den Leiterbahnen 24/2 und 24/3 des nicht dargestellten Heizelementes in bevorzugter Weise eine nicht dargestellte Isolierschicht (z. B. aus Aluminiumoxid) angebracht, damit keine elektrische Beeinflussung des Signals von auf dem Träger aufgebrachten (nicht dargestellten) Sensorelementen bewirkt wird. Die Leiterbahnen 24/1 bis 24/3 auf der Träger-Großfläche 23/1 werden bevorzugt aus einem Platinmetall (z. B. Platin), im Falle der Leiterbahnen 24/2, 24/3 für das nicht dargestellte Heizelement auch aus Wolfram hergestellt und zumeist mit einem Anteil von etwa 40 Gew.-% eines keramischen Materials versetzt; das mit dem Metall der Leiterbahnen 24/1 bis 24/3 vermischte Keramikmaterial entspricht vorzugsweise dem Material des Trägers 15. Auch das Material der Kontaktflächen 25/1 bis 25/3 besteht bevorzugt aus einem oder mehreren Platinmetallen, bevorzugt ebenfalls mit entsprechendem Keramikanteil; es hat sich gezeigt, daß derartige Kontaktflächen 25/1 bis 25/3 bei Sinterprozessen anläßlich der Herstellung derartiger Gassensoren nicht abschmelzen bzw. nicht abdampfen, daß sie außerdem gute elektrische Kontakteigenschaften besitzen und auch bei höheren Temperaturen diese guten Kontakteigenschaften nicht verlieren. Derartige Kontaktflächen 25/1 bis 25/3 weisen bei Verwendung als Lötanschluß eine Temperaturbeständigkeit bis ca. 500° C auf, sind aber auch für eine Klemmkontaktierung sehr gut geeignet. - Der Träger 15 hat im vorliegenden Beispiel eine Dicke von 1 mm und ist 8 mm breit; die Leiterbahn 24/1 für das nicht dargestellte Sensorelement ist 0,8 mm breit und die beiden Leiterbahnen 24/2 und 24/3 für das nicht dargestellte Heizelement sind 1,5 mm breit. Die Abmessungen von Träger 15, den Leiterbahnen 24/1 bis 24/3, den Kontaktflächen 25/1 bis 25/3 und des Metallgehäuses 11 können den Anwendungszwecken angepaßt werden. Sensorelemente mit Leiterbahnen 24 und Kontaktflächen 25 können auch auf der zweiten Großfläche 23/2 des Trägers 15 aufgebracht werden.

Die Dichtung 13 setzt sich im wesentlichen aus drei Bauelementen zusammen: Aus einem unteren Formteil 26, einem oberen Formteil 27 und einem Elektroisolierpulver 28. Die Formteile 26 und 27 bestehen aus einem elektrisch isolierenden Material wie z. B. Aluminiumoxid, sind mit ihrer Umfangsfläche in der Längsbohrung 12/1 des Metallgehäuses 11 geführt und mit ihren einander zugekehrten Stirnseiten 29 und 30 derart mit Abstand zueinanderangeordnet, daß der dadurch gebildete Spalt 31 bis zur Oberfläche der Metallgehäuse-Längsbohrung 12/1 reicht. Die meßgasseitäge Stirnfläche 32 des unteren Formteiles 26 liegt auf der Schulter 20 in der Gehäuse-Längsbohrung 12 auf und die anschlußseits weisende Stirnfläche 33 des oberen Formteiles 27, die bevorzugt etwas ballig oder angeschrägt ausgeführt ist, liegt an dem unter mechanischer Vorspannung stehendem Federelement 14 an; für die Durchführung des Trägers 15 durch das Federelement 14 und auch für an die Stirnfläche 33 des oberen Formteils 27 angeformte Führungsflächen 34 für einen nicht dargestellten Anschlußstecker befindet sich eine Öffnung 35 im Federelement 14.

Bei dem unteren Formteil 26 wie auch bei dem oberen Formteil 27 geht von den einander zugekehrten Stirnseiten 29 und 30 je eine kegelstumpfförmige Tasche 36 bzw. 37 aus, deren Durchmesser sich in Richtung auf die Stirnfläche 32 des unteren Formteils 26 bzw. in Richtung auf die Stirnfläche 33 des oberen Formteils 27 verringert und jeweils in einem schlitzförmigen Durchbruch 38 bzw. 39 für den Träger 15 ausläuft. Die in den Formteilen 26 und 27 befindlichen Durchbrüche 38 und 39 liegen eng am Träger 15 an, doch zumindest das obere Formteil 27 ist auf dem Träger 15 bei den vorkommenden Betriebstemperaturen des Gassensors 10 verschiebbar angeordnet. Die Endbereiche der schlitzförmigen Durchbrüche 38 und 39 sind mit zusätzlichen Aufbohrungen 40 versehen, welche sich in Richtung der einander zugekehrten Stirnseiten 29 und 30 der Formteile 26 und 27 hin erweitern (siehe Figur 3).

Der von den Taschen 36 und 37 in den Formteilen 26 und 27 gebildete Hohlraum und ebenfalls der zwischen den beiden Formteilen 26 und 27 gebildete Spalt 31 ist mit einem Elektroisolierpulver 28 gefüllt, das bei den in diesem Bereich auftretenden Temperaturen plastisch verformbar bleibt und vorzugsweise aus Talkum besteht. Dieses Elektroisolierpulver 28 wird anläßlich der Montage eines solchen Gassensors 10 zu einem (nicht dargestelltem) Formkörper vorgepreßt und auf dem Träger 15 mittels eines in diesem Formkörper eingeformten (nicht bezeichneten) Längsschlitz aufgefädelt. Das Elektroisolierpulver 28 berührt im Bereich des Spaltes 31 zwischen den beiden Formteilen 26 und 27 das Metallgehäuse 11 und dichtet auch diesen Bereich mit ab. Infolge von Temperaturwechseln auftretende, unterschiedliche Ausdehnungen der Stoffe des Metallgehäuses 11, der Formteile 26, 27 des Trägers 15 und des Elektroisolierpulvers 28 werden aufgrund der beschriebenen Gestaltung und der Funktion des Federelementes 14 sicher ausgeglichen. Die Dichtung 13 erfüllt sicher ihre Funktion, widersteht sicher allen in der Praxis vorkommenden Schüttelbeanspruchungen und gewährleistet eine hohe Fertigungssicherheit in einer Massenproduktion.

In der Figur 4 ist ein Gassensor 10' gezeigt, der in der Längsbohrung 12/1' seines Metallgehäuses 11' eine erfindungsgemäße Dichtung 13' enthält; das Metallgehäuse 11' unterscheidet sich von dem Metallgehäuse 11 nach Figur 1 dadurch, daß es kein Außengewinde 18 für einen Anschlußstecker und keinen Bördelrand 19 besitzt. Ausschließlich des in Figur 1 dargestellten Federelementes 14, das in vorliegender Figur 4 mit 14' bezeichnet und an anderer Stelle angeordnet ist, entspricht dieser Bereich des Gassensors 10' (einschließlich Träger 15' mit den nicht dargestellten Sensorelementen, Heizelementen, Kontaktflächen und Leiterbahnen und mit dem Schutzrohr 21') dem Gassensor 10 nach Figur 1. Der in dieser Figur 4 dargestellte Gassensor 10' ist derart weitergebildet, daß er mit der erfindungsgemäßen Dichtung 13' vorteilhaft zu einer zugentlasteten Klemmkontaktierung 41 für die (nicht dargestellten) Kontaktflächen auf dem Träger 15' versehen ist. Zu diesem Zweck ist auf der der anschlußseitigen, bevorzugt ebenen Stirnfläche 33' des oberen Dichtungsformteils 27' eine elektrisch isolierende Kontaktführungshülse 42 angeordnet, die in der Metallgehäuse-Längsbohrung 12/1' mit ihrem Umfang fixiert ist und vorzugsweise aus Aluminiumoxid besteht (siehe Figur 5). Diese Kontaktführungshülse 42 besitzt meßgasseits eine koaxiale Vertiefung 43, anschlußseits eine koaxiale Vertiefung 44 und ein zwischen den Vertiefungen 43 und 44 liegendes Zwischenstück 45. In das Zwischenstück 45 der Kontaktführungshülse 42 sind in Längsrichtung des Gassensors 10' ein um den Anschlußbereich des Trägers 15' angeordneter Schlitz 46 mit ebenfalls in Längsrichtung des Gassensors 10' verlaufenden, seitlichen Nuten 47/1 und 47/2 und den Nuten 47/1 bzw. 47/2 zugeordnete Durchgangslöcher 48/1 bzw. 48/2 eingeformt. Jede der Nuten 47/1 bzw. 47/2 mit dem entsprechenden Durchgangsloch 48/1 bzw. 48/2 dient zur Aufnahme und Fixierung eines Klemmkontaktteiles 49/1 bzw. 49/2, das haarnadelförmig gestaltet, mit seinem kurzen, freien Endabschnitt als Klemmkontakt 50 in einer Nut 47 und auf einer (in Figur 4 nicht dargestellten) Kontaktfläche auf dem Träger 15' liegt und mit seinem anderen Schenkel 51 durch ein Durchgangsloch 48 und dann Richtung Anschluß führt. In der bevorzugten Ausführungsform gemäß Figur 4 befindet sich jeweils ein Klemmkontaktteil 49/1 bzw. 49/2 direkt gegenüber auf einer der Großflächen 23/1' und 23/2' des Trägers 15'; es wird durch diese Anordnung vermieden, daß Biegebeanspruchungen auf den anschlußseitigen Bereich des in der Dichtung 13' eingespannten Trägers 15' wirken. Sofern nur auf einer der Großflächen 23/1' bzw. 23/2' des Trägers 15' (nicht dargestellte) Kontaktflächen angeordnet sind, kann ein einziges entsprechendes Klemmkontaktteil 49 genügen, doch muß dann auf der Gegenseite des Trägers 15' der Schlitz 46 in der Kontaktführungshülse 42 so ausgebildet sein, daß dieser Bereich des Trägers 15' im Schlitz 46 zur Anlage kommt.

Die in die anschlußseitige Vertiefung 44 ragenden Schenkel 51 der Klemmkontaktteile 49 stecken jeweils mit ihrem Endabschnitt in einer metallischen Klemmhülse 52, in welche anschlußseits das abisolierte Ende eines isolierten Anschlußkabels 53 mit hineinführt; der jeweilige Schenkel 51 des Klemmkontaktteils 49 und das jeweilige Anschlußkabel 53 sind in der Klemmhülse 52 durch Klemmprägungen 54 elektrisch miteinander verbunden. Jede Klemmhülse 52 besitzt einen Flansch 55, der sich in der anschlußseitigen Vertiefung 44 der Kontaktführungshülse 42 befindet. Mit einem solchen Flansch 55 liegt jede Klemmhülse 52 auf einer meßgasseits weisenden Fläche 56 eines Elektroisolierkörpers 57. Dieser Elektroisolierkörper 57 ist ebenfalls koaxial zur Längsrichtung des Gassensors 10' angeordnet, in der anschlußseitigen Vertiefung 44 der Kontaktführungshülse 42 zentriert und liegt mit seinem Absatz 58 auf der anschlußseitigen Stirnfläche 59 der Kontaktführungshülse 42 auf. Der Elektroisolierkörper 57 besteht aus Aluminiumoxid oder einem ählichen geeignetem Material und umfaßt in Längsbohrungen 60 die Klemmhülsen 52 und Teile der isolierten Anschlußkabel 53. Der anschlußseitige Endabschnitt dieses Elektroisolierkörpers 57 ist mit einer Schulter 61 versehen, die vorzugsweise nach außen hin etwas schräg abfällt und auf der das Federelement 14' mit seinem um sein Loch 62 angeordneten Bereich aufliegt. Auf die anschlußseitige Stirnfläche 63 des Federelementes 14' greift im Bereich seines äußeren Randes die Schulter 64 einer Metallhülse 65, welche den Gassensor 10' bis in den anschlußseitigen Bereich des Metallgehäuses 11' koaxial umgibt, mittels eingescherter Lappen 66 in Einkerbungen 67 des Metallgehäuses 11' fixiert und gehalten wird und das Federelement 14'

unter mechanischer Vorspannung hält. Der anschlußseitige Endabschnitt dieser Metallhülse 65 ist tassenförmig und bodenlos gestaltet und enthält einen gummiartigen, warmfesten Dichtkörper 68, welcher z. B. aus Silicongummi besteht, sich auf dem Federelement 14', der anschlußseitigen Stirnfläche 69 des Elektroisolierkörpers 57 abstützt und in Durchgangslöchern 70 die Anschlußkabel 53 abdichtend umfaßt. - Die Anschlußkabel 53 sind infolge der Klemmhülsen-Flansche 55, welche sich an der Elektroisolierkörper-Fläche 56 abstützen, zugentlastet im Gassensor 10' arretiert.

In der Figur 6 ist eine spezielle Ausführung einer Klemmkontaktierung 41' dargestellt, und zwar für den Fall, daß der Träger 15'' auf seinen Großflächen 23/1'' und 23/2'' jeweils (nicht dargestellte) gegenüberliegende Kontaktflächen besitzt, welche über (nicht dargestellte) Leiterbahnen mit schichtförmigen Sensor- oder Heizelementen (nicht dargestellt) verbunden sind und miteinander verbunden werden sollen. Die Kontaktführungshülse 42' mit ihrem Schlitz 46', einem ersten Durchgangsloch 48/1', einem zweiten Durchgangsloch 48/2' und den Nuten 47/1' und 47/2' ist gegenüber der Kontaktführungshülse 42 in Figur 4 unverändert. Eine neue Form hat hierbei nur das Klemmkontaktteil 49': Aus der mit einem Flansch 55' versehenen Klemmhülse 52', die im Elektroisolierkörper 57' festgelegt ist, tritt der anschlußseits weisende Schenkel 51' des Klemmkontaktteils 49'. Das Klemmkontaktteil 49' führt mit diesem Schenkel 51' durch das erste Durchgangsloch 48/2', setzt sich dann rückwärtsweisend in der Nute 47/2' bzw. den Schlitz 46' eintauchend als Klemmkontakt 50/2 für die nicht dargestellte Kontaktfläche auf der. Träger-Großfläche 23/2'' fort, ragt in die anschlußseitige Vertiefung 44' der Kontaktführungshülse 42', wendet wiederum seine Verlaufsrichtung und taucht rückwärts in die Nute 47/1' bzw. den Schlitz 46' und liegt als Klemmkontakt 50/1 auf der nicht dargestellten Kontaktfläche auf der Träger-Großfläche 23/1''. Das Klemmkontaktteil 49' wendet in der Kontaktführungshülsen-Vertiefung 43' nochmals seine Verlaufsrichtung und taucht in das zweite Durchgangsloch 48/1' in der Kontaktführungshülse 42'. Bei dieser Ausführungsform einer Klemmkontaktierung 41' ist für zwei auf dem Träger 15'' gegenüberliegende Kontaktflächen (nicht dargestellt) nur ein einziges Klemmkontaktteil 49' erforderlich und es ist dennoch dafür gesorgt, daß auf den anschlußseitigen Endbereich des in der Dichtung 13'' gehaltenen Trägers 15'' keine Biegekräfte wirken.

**Patentansprüche**

1. Gassensor mit plättchenförmigem Sensorelement-Träger (15), insbesondere für Abgase von Brennkraftmaschinen, der mindestens eine Leiterbahn trägt, welche meßgasseits an einem Sensorelement oder einem Heizelement und anschlußseits mit mindestens einer Kontaktfläche (25/1 bis 25/3) versehen ist, der in Längsrichtung in der Längsbohrung (12) eines Metallgehäuse (11) fixiert ist, zwischen seinem Anschlußbereich und seinem Meßbereich von einer Dichtung (13) umgeben ist, durch deren schlitzförmigen Durchbruch (38) er geführt ist und welche in der Längsbohrung (12) des Metallgehäuses (11) geführt ist und die zwei übereinander angeordnete, elektrisch isolierende Formteile (26, 27) hat, die zwischen sich eine koaxiale, ein Dichtmittel (28) enthaltende Tasche (36, 37) bilden, dadurch gekennzeichnet, daß die beiden übereinander angeordneten, elektrisch isolierenden Formteile (26, 27) der Dichtung (13) durch einen Spalt (31) voneinander getrennt sind und daß sich in diesem Spalt (31) und in der zwischen den beiden Formteilen (26, 27) gebildeten Tasche (36/37) ein auch bei Betriebstemperaturen nachgiebiges Elektroisolierpulver (28) befindet, welches mittels mindestens eines Federelementes (14) indirekt zusammengepreßt gehalten ist.

2. Gassensor nach Anspruch 1, dadurch gekennzeichnet, daß das Elektroisolierpulver (28) Talkum ist.

3. Gassensor nach Anspruch 1 oder 2, dadurch gekennzeichnet, daß sich die Tasche (36/37) in den Dichtungs-Formteilen (26, 27) in Richtung Spalt (31) erweitert und bevorzugt kegelig gestaltet ist.

4. Gassensor nach Anspruch 3, dadurch gekennzeichnet, daß die Tasche (36, 37) in den Bereichen der Endabschnitte des schlitzförmigen Durchbruchs (38) für den Träger (15) zusätzliche Aufbohrungen (40) hat, welche sich in Richtung Spalt (31) hin erweitern.

5. Gassensor nach einem der Anprüche 1 bis 4, dadurch gekennzeichnet, daß das Metallgehäuse (11) an seinem anschlußseitigen Endabschnitt einen Bördelrand (19) hat, der Dichtungs-Formteile (26, 27), Elektroisolierpulver (28) und Federelement (14) direkt oder indirekt zusammenhält.

6. Gassensor nach einem der Ansprüche 1 bis 5, dadurch gekennzeichnet, daß die Kontaktflächen (25/1 bis 25/3) der Leiterbahnen (24/1 bis 24/3) aus der anschlußseitigen Stirnfläche (33, 33') des anschlußseitigen Dichtungs-Formteils (27, 27') herausragen.

7. Gassensor nach einem der Ansprüche 1 bis 6, dadurch gekennzeichnet, daß auf der anschlußseitigen Stirnfläche (33') des anschlußseitigen Dichtungs-Formteils (27) eine elektrisch isolierende Kontaktführungshülse (42) koaxial aufsteht, die einen Schlitz (46) hat, welcher den Träger (15') im Bereich seiner Kontaktflächen umfaßt und Klemmkontaktteile (49/1, 49/2) enthält, die mit Anschlußkabeln (53) in elektrischer Verbindung stehen, und daß anschlußseits auf der Kontaktführungshülse (42) ein Elektroisolierkörper (57) aufsteht und koaxial geführt ist, durch welchen Längsbohrungen (60) für die Anschlußkabel (53) führen und auf den koaxial ein Federelement (14') einwirkt, das die Dichtung (13'), die Kontaktführungshülse (42) und den Elektroisolierkörper (57) zusammenpreßt und direkt oder indirekt vom Metallgehäuse (11') gehalten ist.

8. Gassensor nach Anspruch 7, dadurch gekennzeichnet, daß auf der anschlußseitigen Stirnfläche (63) des Federelementes (14') die Schulter (64) einer Metallhülse (65) aufliegt, welche koaxial am Metallgehäuse (11') befestigt ist und das Federelement (14') unter mechanischer Vorspannung hält.

9. Gassensor nach Anspruch 8, dadurch gekennzeichnet, daß die Kontaktführungshülse (42) für jedes Klemmkontaktteil (49/1, 49/2) ein neben dem Schlitz (46) befindliches Durchgangsloch (48/1, 48/2) hat, durch welches ein Schenkel (51) des haarnadelförmigen Klemmkontaktteils (49/1, 49/2) hindurchführt, und daß der freie Endabschnitt des letztgenannten Schenkels (51) mittels einer Klemmhülse (52) an einem Anschlußkabel (53) angeschlossen ist.

10. Gassensor nach Anspruch 9, dadurch gekennzeichnet, daß der in der Kontaktführungshülse (42) befindliche Schlitz (46) seitlich senkrechte Nuten (47/1, 47/2) zur Führung von Klemmkontakten (50) hat.

11. Gassensor nach Anspruch 9 oder 10, dadurch gekennzeichnet, daß die Klemmhülsen (52) jeweils in einer Längsbohrung (60) im Elektroisolierkörper (57) geführt sind und dabei mit einem Flansch (55) an einer zur Dichtung (13') weisenden Fläche (56) des Elektroisolierkörpers (57) anliegen.

12. Gassensor nach einem der Ansprüche 9 bis 11, dadurch gekennzeichnet, daß für auf beiden Großflächen (23/1'', 23/2'') des Trägers (15'') angeordnete Kontaktflächen, die sich direkt gegenüberliegen und miteinander zu verbinden sind, ein derartiges Klemmkontaktteil (49') verwendet wird, welches nur mit einem einzigen, in einer Klemmhülse (52') befestigten Schenkel (51') versehen ist, der zunächst durch ein erstes Durchgangsloch (48/2') in der Kontaktführungshülse (42') führt, dann haarnadelförmig durch den Schlitz (46') taucht und zuletzt in oder durch ein zweites Durchgangsloch (48/1') ragt.

**Claims**

1. Gas sensor with a wafer-like sensor-element carrier (15), especially for exhaust gases of internal-combustion engines, which carries at least one conductor track equipped on the measuring-gas side with a sensor element or a heating element and on the connection side with at least one contact face (25/1 to 25/3) and is fixed longitudinally in the longitudinal bore (12) of a metal housing (11) and which is surrounded, between its connection region and its measuring region, by a sealing means (13), through the slit-shaped perforation (38) of which it is guided and which is guided in the longitudinal bore (12) of the metal housing (11) and has two electric ally insulating mouldings (26, 27) arranged above one another and forming between them a coaxial pocket (36/37) containing a sealant (28), characterized in that the two electrically insulating mouldings (26, 27) of the sealing means (13), which are arranged above one another, are separated from one another by a gap (31), and in that there is in this gap (31) and in the pocket (36/37) formed between the two mouldings (26, 27) an electrically insulating powder (28) which is yielding even at working temperatures and which is held pressed together indirectly by means of at least one spring element (14).

2. Gas sensor according to Claim 1, characterized in that the electrically insulating powder (28) is talcum.

3. Gas sensor according to Claim 1 or 2, characterized in that the pocket (36/37) in the mouldings (26, 27) of the sealing means widens in the direction of the gap (31) and is preferably of conical shape.

4. Gas sensor acording to Claim 3, characterized in that, in the regions of end portions of the slit-shaped perforation (38) for the carrier (15), the pocket (36, 37) has additional drilled-open portions (40) which widen in the direction of the gap (31).

5. Gas sensor according to one of Claims 1 to 4, characterized in that the metal housing (11), in its end portion located on the connection side, has a flanged edge (19) which holds together directly or indirectly the mouldings (26, 27) of the sealing means, the electrically insulating powder (38) and the spring element (14).

6. Gas sensor according to one of Claims 1 to 5, characterized in that the contact faces (25/1 to 25/3) of the conductor tracks (24/1 to 24/3) project from the end face (33, 33'), on the connection side, of the moulding (27, 27') of the sealing means located on the connection side.

7. Gas sensor according to one of Claims 1 to 6, characterized in that an electrically insulating contact guide sleeve (42) stands coaxially on the end face (33'), on the connection side, of the moulding (27) of the sealing means located on the connection side and has a slit (46) which surrounds the carrier (15') in the region of its contact faces and which contains terminal contact parts (49/1, 49/2) connected electrically to connecting cables (53), and in that, on the connection side, there stands guided coaxially on the contact guide sleeve (42) an electrically insulating body (57), through which longitudinal bores (60) for the connecting cables (53) are guided and on which acts coaxially a spring element (14') which presses together the sealing means (13'), the contact guide sleeve (42) and the electrically insulating body (57) and which is held directly or indirectly by the metal housing (11').

8. Gas sensor according to Claim 7, characterized in that there rests on the end face (63), on the connection side, of the spring element (14') the shoulder (64) of a metal sleeve (65) which is fastened coaxially to the metal housing (11') and which keeps the spring element (14') under mechanical pre-stress.

9. Gas sensor according to Claim 8, characterized in that the contact guide sleeve (42) for each terminal contact part (49/1 49/2) has a through-hole (48/1 48/2) which is located next to the slit (46) and through which is guided one leg (51) of the hairpin-shaped terminal contact part (49/1, 49/2), and in that the free end portion of the last-mentioned leg (51) is connected to a connecting cable (53) by means of a clamping bush (52).

10. Gas sensor according to Claim 9, characterized in that the slit (46) located in the contact guide sleeve (42) has laterally perpendicular grooves (47/1, 47/2) for guiding terminal contacts (50).

11. Gas sensor according to Claim 9 or 10, characterized in that the clamping bushes (52) are each guided in a longitudinal bore (60) in the electrically insulating body (57) and at the same time rest by means of a flange (55) against a face (56) of the electrically insulating body (57) pointing towards the sealing means (13').

12. Gas sensor according to one of Claims 9 to 11, characterized in that the terminal contact part (49') used for contact faces which are arranged on both large surfaces (23/1'', 23/2'') of the carrier (15'') and which are located directly opposite one another and are to be connected to one another is one which is equipped with only a single leg (51') which is fastened in a clamping bush (52') and which is initially guided through a first through-hole (48/2') in the contact guide sleeve (42'), then penetrates in the form of a hairpin through the slit (46') and finally projects into or through a second through-hole (48/1').

## Revendications

1. Détecteur de gaz comportant un support (15) d'éléments détecteurs en forme de plaquette, en particulier pour gaz d'echappement de moteurs à combustion interne, qui porte au moins un ruban conducteur presentant, côté gaz à mesurer, un élément détecteur ou un élément chauffant et muni, côté raccord, d'au moins une surface de contact (25/1 à 25/3), support qui est fixe, en direction longitudinale, dans l'alésage longitudinal (12) d'un carter métallique (11) et qui est entouré, entre sa zone de raccordement et sa zone de mesure, par une garniture d'étanchéité (13) à travers la découpe en forme de fente (38) de laquelle il passe et qui est guidée dans l'alésage longitudinal (12) du carter métallique (11) et qui présente deux pièces de forme (26, 27) disposées l'une au-dessus de l'autre, électriquement isolantes et formant entre elles une poche (36/37) coaxiale contenant un produit d'étanchéité (28), caractérisé en ce que les deux pièces de forme (26, 27) disposées l'une au-dessus de l'autre, électriquement isolantes de la garniture d'étanchéité (13) sont séparées l'une de l'autre par une fente (31); et en ce que, dans cette fente (31) et dans la poche (36/37) qui se forme entre les deux pièces de forme (26, 27), se trouve une poudre électriquement isolante (28) qui reste souple même aux températures d'exploitation et qui est maintenue indirectement comprimée à l'aide d'au moins un élément formant ressort (14).

2. Détecteur de gaz selon la revendication 1, caractérisé en ce que la poudre électriquement isolante (28) est du talc.

3. Détecteur de gaz selon la revendication 1 ou 2, caractérisé en ce que la poche (36/37) qui se trouve dans les pièces de forme (26, 27) de la garniture d'étanchéité s'élargit en direction de la fente (31) et qu'elle a de préférence la forme d'un cône.

4. Détecteur de gaz selon la revendication 3, caractérisé en ce que la poche (36, 37) présente, dans les zones des tronçons d'extrémité de la découpe en forme de fente (38) pour le support (15) des perçages complémentaires (40) qui vont en s'élargissant en direction de la fente (31).

5. Détecteur de gaz selon l'une des revendications 1 à 4, caractérisé en ce que le carter métallique (11) présente, à son tronçon d'extrémité côté raccord, un bord serti (9) qui solidarise, directement ou indirectement, les pièces de forme (26, 27) de la garniture d'étanchéité, la poudre électriquement isolante (28) et l'élement formant ressort (14).

6. Détecteur de gaz selon l'une des revendications 1 à 5, caractérisé en ce que les surfaces de contact (25/1 à 25/3) des rubans conducteurs (24/1 à 24/3) dépassent hors de la surface frontale, côté raccord (33, 33') de la pièce de forme (27, 27') de la garniture d'étanchéité côté raccord.

7. Détecteur de gaz selon l'une des revendications 1 à 6, caractérisé en ce que, sur la surface frontale (33'), côté raccord, de la pièce de forme d'étanchéité (27) côté raccord, se dresse coaxialement une douille de guidage de contact électriquement isolante (42) qui présente une fente (46) qui enserre le support (15') dans la zone de ses surfaces de contact et qui contient des pièces de contact pour bornage (49/1, 49/2) qui sont en liaison électrique avec des câbles de raccordement (53); et en ce que, côté raccord, se dresse sur la douille de guidage pour contact (42) et est guidé coaxialement un corps électriquement isolant (57) à travers lequel passent des alésages longitudinaux (60) pour le câble de raccordement (53) et sur lequel agit coaxialement un élément formant ressort (14') qui comprime ensemble la garniture d'étanchéité (13') la douille de guidage pour contact (42) et le corps électriquement isolant (57) et qui est maintenu, directement ou indirectement, par le carter métallique (11').

8. Détecteur de gaz selon la revendication 7, caractérisé en ce que, sur la surface frontale (63), côté raccord, de l'élément formant ressort (14'), repose l'épaulement (64) d'une douille métallique (65) qui est fixée coaxialement au carter métallique (11') et qui tient l'élément formant ressort (14') sous précontrainte mécanique.

9. Détecteur de gaz selon la revendication 8, caractérisé en ce que la douille de guidage de contact (42) présente, pour chaque pièce de contact pour bornage (49/1, 49/2) un trou de passage (48/1, 48/2) qui se trouve à côté de la fente (46) et à travers lequel passe une branche (51) de la pièce de contact pour bornage en forme d'épingle à cheveux (49/1, 49/2); et en ce que le tronçon d'extrémité libre de la branche (51) mentionnée en dernier lieu est relié à un câble de raccordement (53) au moyen d'une douille pour bornage (52).

10. Détecteur de gaz selon la revendication 9, caractérisé en en ce que la fente (46) qui se trouve dans la douille de guidage de contact (42) présente latéralement des rainures verticales (47/1, 47/2) pour guider les contacts de bornage (50).

11. Détecteur de gaz selon la revendication 9 ou 10 caractérisé en ce que les douilles pour bornage (52) sont respectivement guidées dans un alésage longitudinal (60) du corps électriquement isolant (57) et s'y appuient, par un flasque (55), contre une surface (56), tournée vers la garniture d'étanchéité (13'), du corps électriquement isolant (57).

12. Détecteur de gaz selon l'une des revendications 9 à 11, caractérisé en ce que pour les surfaces de contact qui sont disposées sur deux grandes surfaces (23/1", 23/2") du support (15"), qui sont directement situées l'une en face de l'autre et qui sont reliées l'une à l'autre, on emploie une pièce de contact pour bornage (49') qui ne comporte qu'une seule branche (51') qui est située dans une douille pour bornage (52'), qui passe d'abord par un premier trou de passage (48/2') prévu dans la douille de guidage de contact (42'), puis passe, en forme d'épingle à cheveux, par la fente (46') et enfin pénètre dans ou à travers un second trou de passage (48/1').

# FIG.2

# FIG.1

# FIG.3

# FIG. 4

# FIG. 5

# FIG. 6